# EUROPEAN PATENT APPLICATION

(11) **EP 4 775 334 A1**
(43) Date of publication of application: **15.07.2026**
(21) Application number: 23951549.7
(22) Date of filing: 08.09.2023
(51) Int. Cl.: B23B 27/00, B23B 29/24

(54) **CUTTING SYSTEM AND CUTTING TOOL**

(71) Applicant: Sumitomo Electric Industries, Ltd., Osaka-shi, Osaka 541-0041 (JP)
(72) Inventor: OHMORI, Hiroki, Osaka-shi, Osaka 541-0041 (JP); YAMAGISHI, Suguru, Osaka-shi, Osaka 541-0041 (JP); KUWAYAMA, Ichiro, Osaka-shi, Osaka 541-0041 (JP); TAKANO, Toyohisa, Osaka-shi, Osaka 541-0041 (JP)
(74) Representative: Boult Wade Tennant LLP
(86) International application number: PCT/JP2023/032825
(87) International publication number: WO 2025/052651

(57) **Abstract**

A cutting system according to an embodiment of the present disclosure comprises: a power transfer device having a power transmission antenna provided in a machining space of a machine tool; and a cutting tool which is installed in the machining space and which has a power reception antenna circuit that receives transmitted power from the power transmission antenna. The cutting tool comprises: a first tool body provided with a first sensor; and a housing, separate from the first tool body, which is connected to the first tool body via a first power line for providing power to the first sensor and inside which the power reception antenna circuit is housed.

## Description

### TECHNICAL FIELD

The present disclosure relates to a cutting system and a cutting tool.

### BACKGROUND ART

Patent literature 1 discloses a cutting tool including a body portion, a sensor unit disposed in the body portion, a wireless communication unit that transmits information indicating an output of the sensor to the outside, and a battery that supplies electric power to each unit. The battery is housed in a battery housing portion which is a space provided in the body portion. The cutting tool can monitor the state of the cutting tool during machining by a sensor and transmit the state to the outside.

### CITATION LIST

### [PATENT LITERATURE]

PATENT LITERATURE 1: International Publication No. WO 2022/230149

### SUMMARY OF THE INVENTION

A cutting system according to an embodiment of the present disclosure includes a power supply device including a power transmitting antenna provided in a machining space of a machine tool, and a cutting tool disposed in the machining space and including a power receiving antenna circuit that receives transmission electric power from the power transmitting antenna. The cutting tool includes a first tool body provided with a first sensor, and a housing that is separate from the first tool body, connected to the first tool body via a first power line for providing electric power to the first sensor, and houses the power receiving antenna circuit therein.

### BRIEF DESCRIPTION OF DRAWINGS

[FIG. 1] FIG. 1 is a diagram illustrating an overall configuration of a cutting system according to an embodiment.
[FIG. 2] FIG. 2 is an external view of an end surface of a turret on which a cutting tool according to a first embodiment is mounted when viewed from the front.
[FIG. 3] FIG. 3 is a block diagram illustrating an example of a configuration of a cutting tool.
[FIG. 4] FIG. 4 is a cross-sectional view of a housing.
[FIG. 5] FIG. 5 is a diagram illustrating a substrate surface of a circuit substrate in FIG. 4.
[FIG. 6] FIG. 6 is a block diagram of a cutting tool according to a modification.
[FIG. 7] FIG. 7 is an external view of the end surface of the turret on which a plurality of cutting tools is mounted when viewed from the front.
[FIG. 8] FIG. 8 is an external view of the end surface of the turret on which a cutting tool according to a second embodiment is mounted when viewed from the front.
[FIG. 9] FIG. 9 is a cross-sectional view taken along line IV-IV in FIG. 8.
[FIG. 10] FIG. 10 is an external view of the end surface of the turret on which a cutting tool according to a third embodiment is mounted when viewed from the front.
[FIG. 11] FIG. 11 is a block diagram of a cutting tool according to a third embodiment.
[FIG. 12] FIG. 12 is a diagram illustrating a power receiving antenna circuit according to a fourth embodiment.

### DETAILED DESCRIPTION

### [Problems to be solved by present disclosure]

In the conventional cutting tool described above, when the electric power of the battery is consumed and exhausted, the battery is to be replaced with a new battery. In this case, an old battery is to be taken out from the battery housing portion and the new battery is to be installed, making it difficult to replace the battery during machining. Thus, when the machining time becomes long and the electric power of the battery is exhausted during the machining, it may become impossible to monitor the subsequent state of the cutting tool.

Thus, it is conceivable to wirelessly supply power to the sensor of the cutting tool. The wireless power supply to the sensor of the cutting tool makes it feasible to supply power to the cutting tool during machining, enabling continuous monitoring of the state of the cutting tool even during extended machining time.

Here, in order to wirelessly supply power to the sensor, it is necessary to provide a power receiving antenna circuit for receiving transmitted electric power in the cutting tool. For example, it is conceivable to incorporate a power receiving antenna circuit in a body portion (shank) of a cutting tool instead of a battery. However, in this case, the power receiving antenna circuit needs to be disposed in a limited space such as a space provided in the body portion of the cutting tool, thereby restricting not only a placement configuration of the power receiving antenna circuit but also a circuit scale of the power receiving antenna circuit such as a size and the number of power receiving antenna elements.

### [Advantageous effects of present disclosure]

According to the present disclosure, it is possible to enhance flexibility in the placement and flexibility in the circuit scale for the power receiving antenna circuit.

First, the contents of the embodiment will be listed and described.

### [Overview of embodiment]

(1) A cutting system according to an embodiment of the present disclosure includes a power supply device including a power transmitting antenna provided in a machining space of a machine tool, and a cutting tool disposed in the machining space and including a power receiving antenna circuit that receives transmission electric power from the power transmitting antenna. The cutting tool includes a first tool body provided with a first sensor, and a housing that is separate from the first tool body, is connected to the first tool body via a first power line for supplying electric power to the first sensor, and houses the power receiving antenna circuit therein.

According to the above configuration, the power receiving antenna circuit is housed in the housing that is separate from the first tool body, thereby eliminating a need to incorporate the power receiving antenna circuit in the first tool body. As a result, the placement and circuit scale of the power receiving antenna circuit are not restricted by the first tool body, and thus the flexibility in the placement and circuit scale of the power receiving antenna circuit can be enhanced.

(2) In the cutting system of the above (1), the machine tool may include a turret that grip the tool body. The housing may include a housing body and a fixing portion that fixes the housing body to an end surface of the turret in an axial direction of the turret. In this case, the housing can be fixed to the turret together with the tool body.

(3) In the cutting system according to the above (2), the housing body may have an opposing surface that faces the end surface in a state where the housing body is fixed to the end surface. The fixing portion may include an adhesion portion that adheres the opposing surface to the end surface. In this case, the housing body can be fixed to the end surface of the turret by the adhesion portion. As the adhesion portion, a magnet, an adhesive, or the like can be used.

(4) In the cutting system of the above (2), the fixing portion may include a gripped portion that is gripped in a tool mounting groove of the turret, and an arm portion extending from the gripped portion and having a distal end provided with the housing body. The arm portion may extend toward a rotation axis of the turret along the end surface of the turret in a state where the gripped portion is gripped in the tool mounting groove. In this case, the housing body can be fixed to the end surface of the turret using the tool mounting groove of the turret. This allows the housing body to be easily fixed to the turret. In addition, the housing body can be easily fixed near the rotation axis of the turret.

(5) In the cutting system of the above (2) to (4), the housing body may be fixed to the end surface of the turret such that a rotation axis of the turret passes through a center of an antenna element of the power receiving antenna circuit. This suppresses a change in a relative position of the antenna element with respect to the power transmitting antenna even when the turret rotates, thereby enabling stable reception of transmission electric power from the power transmitting antenna.

(6) In the cutting system of the above (5), the antenna element may be a loop element. In this case, by fixing the housing body such that the rotation axis of the turret passes through the center of the loop element, the relative position of the antenna element with respect to the power transmitting antenna does not change significantly even when the turret rotates.

(7) The cutting system of any one of the above (1) to (6) may further include a power storage unit that is provided in one of the first tool body and the housing and stores electric power received by the power receiving antenna circuit. In this case, even when the power receiving antenna circuit does not receive the transmission electric power, the electric power stored in the power storage unit can be provided to the first sensor.

(8) In the cutting system of any one of (1) to (7), the cutting tool may further include a second tool body provided with a second sensor and connected to the housing via a second power line for supplying electric power to the second sensor, and a power supply control unit that supplies electric power received by the power receiving antenna circuit to the first sensor and the second sensor. In this case, the electric power received by a single power receiving antenna circuit can be supplied to a plurality of sensors.

(9) In the cutting system of the above (8), the cutting system may further include an external device that is disposed outside the machining space and controls the power supply control unit. The cutting tool may further include a communication unit that can communicate with the external device. The power supply control unit may control the electric power to be provided to the first sensor and the electric power to be provided to the second sensor based on a control command from the external device provided via the communication unit. In this case, the power supply to the first sensor and the second sensor can be controlled from the outside of the machining space.

(10) In the cutting system of the above (9), the control command may be generated based on at least one of information indicating a state of the machine tool or output information that is transmitted from the communication unit and includes an output of the first sensor and an output of the second sensor. By referring to the information indicating the state of the machine tool, it can be determined which tool body is currently in use from among the first tool body and the second tool body. Furthermore, by referring to the output information, it can be determined which tool body is currently in use from among the first tool body and the second tool body. Thus, by causing the external device to output a control command that prioritizes power supply to the sensor of the tool body currently in use, efficient power supply becomes possible.

(11) In the cutting system of any one of the above (1) to (10), the power receiving antenna circuit may include a plurality of circuit units each including a power receiving antenna that receives transmission electric power from the power transmitting antenna, and a combining circuit that combines electric powers output from the plurality of circuit units. In this case, each of the plurality of circuit units includes a power receiving antenna, and each of the plurality of circuit units outputs the electric power. Thus, by combining the electric powers output by the plurality of circuit units, more electric power can be received.

(12) An embodiment according to another aspect is a cutting tool to be disposed in a machining space of a machine tool. The cutting tool includes a power receiving antenna circuit that receives transmission electric power from a power supply device transmitted through a power transmitting antenna provided in the machining space, a tool body provided with a sensor, and a housing that is separate from the tool body, is connected to the tool body via a power line for providing electric power to the sensor, and houses the power receiving antenna circuit therein.

### [Details of embodiment]

Hereinafter, preferred embodiments will be described with reference to the drawings. At least some of the embodiments described below may be combined as desired.

### [Overall configuration]

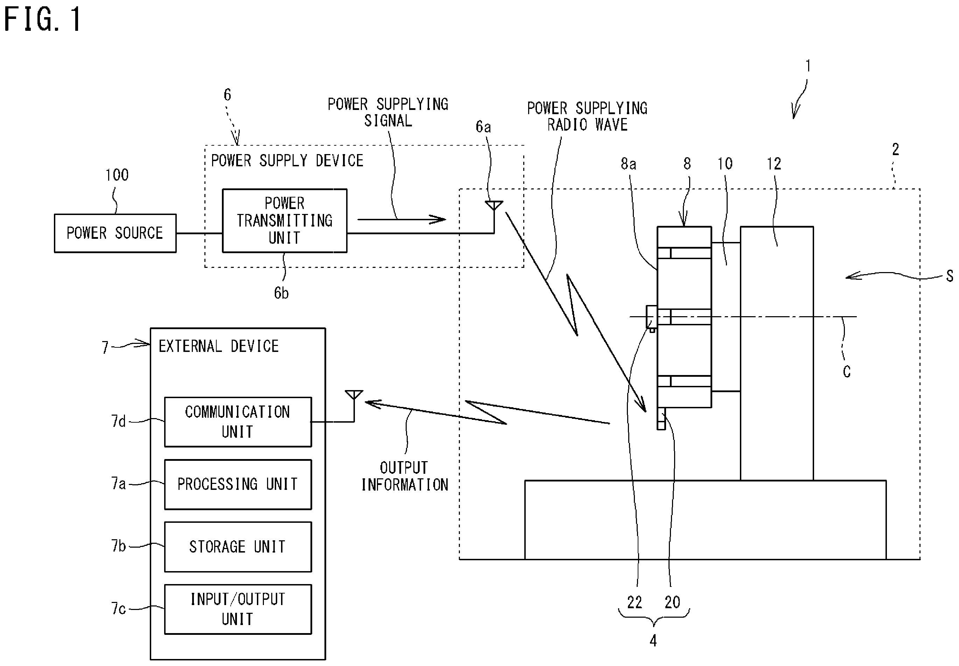

FIG. 1 is a diagram illustrating an overall configuration of a cutting system according to an embodiment. In FIG. 1, a cutting system 1 includes a machine tool 2, a cutting tool 4, a power supply device 6, and an external device 7.

The machine tool 2 is, for example, a turret lathe. The machine tool 2 includes a turret 8, a drive device 10, and a movement device 12. The cutting tool 4 is mounted on the turret 8. A plurality of cutting tools 4 is mountable on the turret 8. The drive device 10 is a device that rotationally drives the turret 8 around a rotation axis C. The movement device 12 is a device that moves the turret 8 along an axial direction. The machine tool 2 also includes a main spindle unit (not shown) that grips and rotates a workpiece.

The machine tool 2 rotates and moves the turret 8 to position the cutting tool 4 mounted on the turret 8 at a machining position, and performs cutting machining on the workpiece. The cutting machining is performed within a machining space S of the machine tool 2. The cutting tool 4, the turret 8, the drive device 10, the movement device 12, the main spindle unit, and the like are disposed within the machining space S. The machining space S is defined by a cover made of metal, resin, or the like. That is, the machining space S is a space enclosed by the cover. During cutting machining, cutting oil (coolant) is supplied. In order to prevent the cutting oil from splattering, the cutting machining is performed within the enclosed machining space S.

The cutting tool 4 is a tool for performing cutting machining on a workpiece. More specifically, the cutting tool 4 is a tool for performing turning in cutting machining. Turning is a machining performed by pressing a tool against a rotating workpiece. The cutting tool 4 includes a first tool body 20 and a housing 22 separate from the first tool body 20. The first tool body 20 and the housing 22 are mounted at an end surface 8a of the turret 8. The end surface 8a is an end surface opposite to the end surface closer to the drive device 10, among the end surfaces on each of the two sides of the turret 8 in the axial direction.

The cutting tool 4 of the present embodiment includes a sensor. The sensor has a function of detecting a state of the cutting tool 4. The cutting tool 4 further has a function of transmitting output information indicating an output of the sensor to the outside. The configuration of the cutting tool 4 will be described in detail later.

The power supply device 6 has a function of wirelessly supplying power to the cutting tool 4 within the machining space S. The power supply device 6 includes a power transmitting antenna 6a and a power transmitting unit 6b. The power transmitting unit 6b generates a power supplying signal based on electric power supplied by a power source 100, and provides the signal to the power transmitting antenna 6a. The power transmitting antenna 6a is fixed at a position where wireless power supply to the cutting tool 4 within the machining space S is possible. The power transmitting antenna 6a transmits the power supplying signal to the cutting tool 4 as a power supplying radio wave. The electric power transmitted by the power supply device 6 to the cutting tool 4 is used as electric power for operating the sensor and transmitting output information in the cutting tool 4.

The power supply device 6 of the present embodiment generates and transmits a signal of a frequency band including 5.7 GHz. That is, the power transmitting antenna 6a radiates a radio wave of a frequency band including 5.7 GHz. The frequency band of the radio waves radiated by the power supply device 6 is not particularly limited, but may be a frequency band including 2.4 GHz from the viewpoint of regulations and the like.

The external device 7 is a device disposed outside (the machining space S of) the machine tool 2. The external device 7 has a function of performing wireless communication with the cutting tool 4. The external device 7 receives the output information transmitted by the cutting tool 4 through wireless communication. The external device 7 is configured by a computer or the like. The external device 7 includes a processing unit 7a, a storage unit 7b, an input/output unit 7c, and a communication unit 7d.

The processing unit 7a is any of various processors suitable for computer control, such as a central processing unit (CPU), a graphics processing unit (GPU), a digital signal processor (DSP), a field programmable gate array (FPGA), an application specific integrated circuit (ASIC), and a quantum processor.

The storage unit 7b is, for example, a flash memory, a hard disk, a read only memory (ROM), a random access memory (RAM), or the like. The storage unit 7b stores a computer program to be executed by the processing unit 7a and necessary information. The processing unit 7a executes a computer program stored in a computer-readable non-transitory recording medium such as the storage unit 7b, thereby implementing various process functions of the processing unit 7a.

The input/output unit 7c has a function of outputting various types of information to the outside and a function of receiving an operation input by an operator. The input/output unit 7c includes devices such as a monitor, a touch panel, a keyboard, and a mouse. The communication unit 7d has a function of performing wireless communication with the cutting tool 4. The communication unit 7d performs wireless communication with the cutting tool 4 by, for example, Bluetooth (registered trademark). Thus, the communication unit 7d performs wireless communication using a frequency band including 2.4 GHz.

The processing unit 7a of the external device 7 has a function of receiving the output information transmitted by the cutting tool 4 via the communication unit 7d and performing a process related to the output information. The processing unit 7a extracts information indicating a detection result of the sensor from the output information, and stores the information in the storage unit 7b or outputs the detection result to the outside via the input/output unit 7c.

### [Cutting tool according to first embodiment]

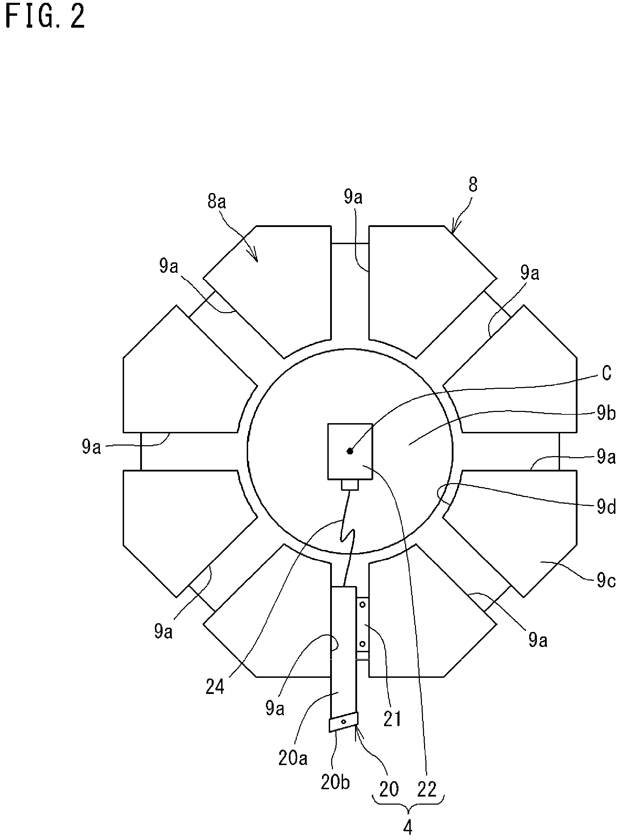

FIG. 2 is an external view of the end surface 8a of the turret 8 on which the cutting tool 4 according to the first embodiment is mounted when viewed from the front. As illustrated in FIG. 2, the turret 8 is a member having a substantially polygonal (octagonal) outer shape. The turret 8 is formed of a steel material such as steel for machine structural use. The end surface 8a of the turret 8 has a plurality of (eight) tool mounting grooves 9a, a circular surface portion 9b, and an outer surface portion 9c. The eight tool mounting grooves 9a are provided corresponding to the respective sides of the octagon. The eight tool mounting grooves 9a are each recessed in the axial direction with respect to the outer surface portion 9c. The eight tool mounting grooves 9a each extend along a radial direction with the rotation axis C as the center. The eight tool mounting grooves 9a are connected to each other by an annular groove 9d surrounding the circular surface portion 9b. The circular surface portion 9b is a surface provided at the center of the end surface 8a of the turret 8. The position of the circular surface portion 9b in the axial direction may be the same as or different from the position of the outer surface portion 9c in the axial direction.

As described above, the cutting tool 4 according to the first embodiment includes the first tool body 20 and the housing 22. The first tool body 20 includes a shank 20a and a cutting insert 20b. The shank 20a is a metal member having a square columnar shape. The cutting insert 20b is a cutting edge for cutting a workpiece. The cutting insert 20b is detachably mounted on the distal end of the shank 20a. The first tool body 20 is mounted in the tool mounting groove 9a of the turret 8.

In the present embodiment, the first tool body 20 is mounted in one of the eight tool mounting grooves 9a. The shank 20a of the first tool body 20 is mounted in the tool mounting groove 9a together with a fixing plate 21. The fixing plate 21 is a jig for gripping the shank 20a in the tool mounting groove 9a. The shank 20a is gripped between the fixing plate 21 and the wall of the tool mounting groove 9a.

The housing 22 is fixed to the circular surface portion 9b. The housing 22 is fixed on the rotation axis C. Thus, the housing 22 is fixed at the center of the end surface 8a of the turret 8. The first tool body 20 and the housing 22 are connected to each other via a first power line 24. The first power line 24 is a power line for providing electric power from the housing 22 to the first tool body 20. The first tool body 20 is provided with a sensor and a wireless communication unit (described later). The housing 22 houses a rectenna (described later). The first power line 24 is a power line for providing electric power output by the rectenna to the sensor and the wireless communication unit.

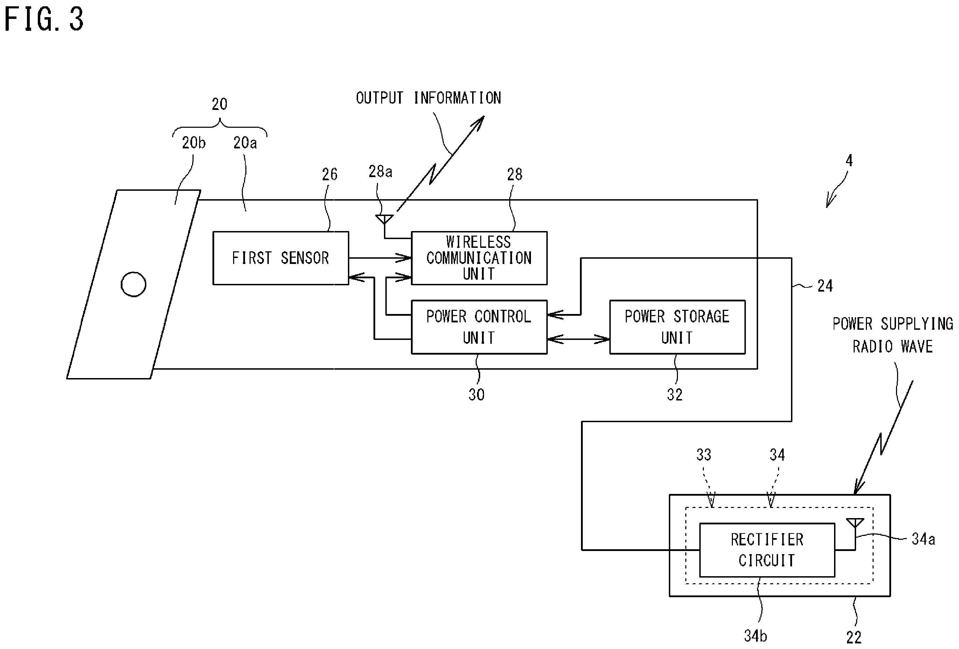

FIG. 3 is a block diagram illustrating an example of a configuration of the cutting tool 4. As illustrated in FIG. 3, the cutting tool 4 includes a first sensor 26, a wireless communication unit 28, a power control unit 30, a power storage unit 32, and a power receiving antenna circuit 33, in addition to the first tool body 20 and the housing 22 described above.

The first sensor 26, the wireless communication unit 28, the power control unit 30, and the power storage unit 32 are provided in the shank 20a. The first sensor 26, the wireless communication unit 28, the power control unit 30, and the power storage unit 32 are housed in a space provided inside the shank 20a. The power receiving antenna circuit 33 is housed inside the housing 22.

The power receiving antenna circuit 33 receives transmission electric power from the power transmitting antenna 6a of the power supply device 6. The power receiving antenna circuit 33 includes one rectenna 34. The rectenna 34 includes a power receiving antenna 34a and a rectifier circuit 34b. The power receiving antenna 34a receives the power supplying radio wave from the power supply device 6. The power receiving antenna 34a provides an electrical signal of the received radio wave to the rectifier circuit 34b. The rectifier circuit 34b rectifies the electric signal provided by the power receiving antenna 34a, converts the electric signal into DC electric power, and outputs the DC electric power. The DC electric power output by the rectifier circuit 34b is provided to the power control unit 30 of the first tool body 20 via the first power line 24.

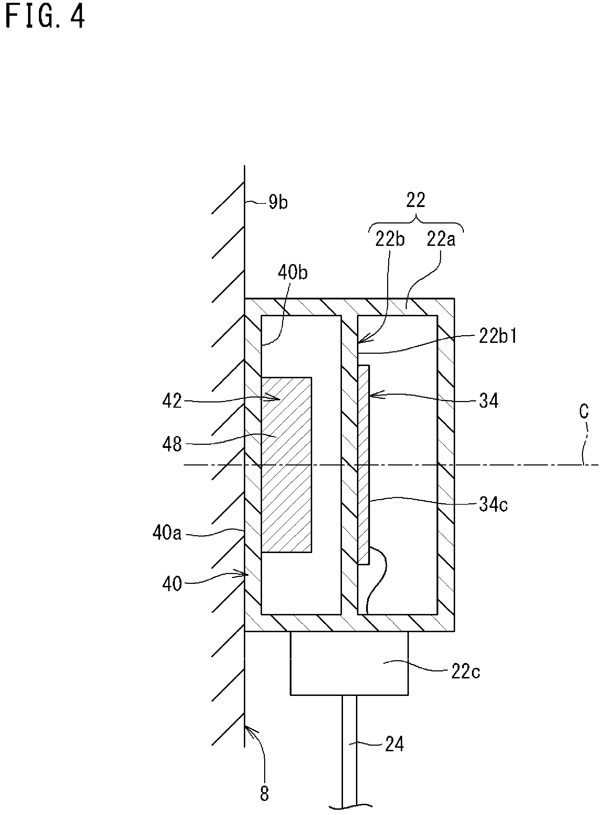

FIG. 4 is a cross-sectional view of the housing 22. FIG. 4 illustrates a cross section along a plane in the vertical direction including the rotation axis C. The housing 22 includes a box-shaped housing body 22a, a partition plate 22b, and a waterproof connector 22c.

The housing body 22a is a hollow box-shaped member formed of resin or the like. The internal space of the housing body 22a is sealed. Thus, cutting oil is prevented from entering the internal space of the housing body 22a. The waterproof connector 22c is a connector for connecting the first power line 24 to a rectenna 34 (power receiving antenna circuit 33) inside the housing 22. The waterproof connector 22c prevents cutting oil from entering the housing 22 from the connection portion between the first power line 24 and the rectenna 34.

The outer plate 40 closer to the turret 8 in the housing body 22a is disposed along the circular surface portion 9b of the end surface 8a of the turret 8. The outer plate 40 has an opposing surface 40a facing the circular surface portion 9b. A fixing portion 42 is fixed to the inner surface 40b of the outer plate 40. The fixing portion 42 has a function of fixing the housing body 22a to the turret 8. The fixing portion 42 of the present embodiment includes a plate-like magnet 48. The magnet 48 is fixed to the inner surface 40b with an adhesive or the like. That is, the magnet 48 is fixed within the space inside the housing body 22a.

The circular surface portion 9b and the opposing surface 40a are adhered to each other by the magnetic force of the magnet 48. Thus, the housing body 22a is fixed to the circular surface portion 9b. That is, the magnet 48 forms an adhesion portion that adheres the circular surface portion 9b and the opposing surface 40a to each other. Furthermore, since the housing body 22a is fixed to the circular surface portion 9b of the turret 8 by the magnetic force, the housing body 22a can be easily attached to and detached from the turret 8, and the fixing position can be easily changed.

Since the magnet 48 is fixed in the space inside the housing body 22a, it is possible to prevent metal powders and chips generated by cutting machining from directly adhering to the magnet 48 by magnetic force, thereby facilitating removal of the metal powders and chips adhering to the housing body 22a after machining.

The partition plate 22b is a plate-like member formed of resin or the like. The partition plate 22b is provided inside the housing body 22a in a state of facing the outer plate 40. The rectenna 34 is provided on a plate surface 22b1 of the partition plate 22b, the plate surface 22b1 facing away from the outer plate 40. The rectenna 34 includes a circuit substrate 34c.

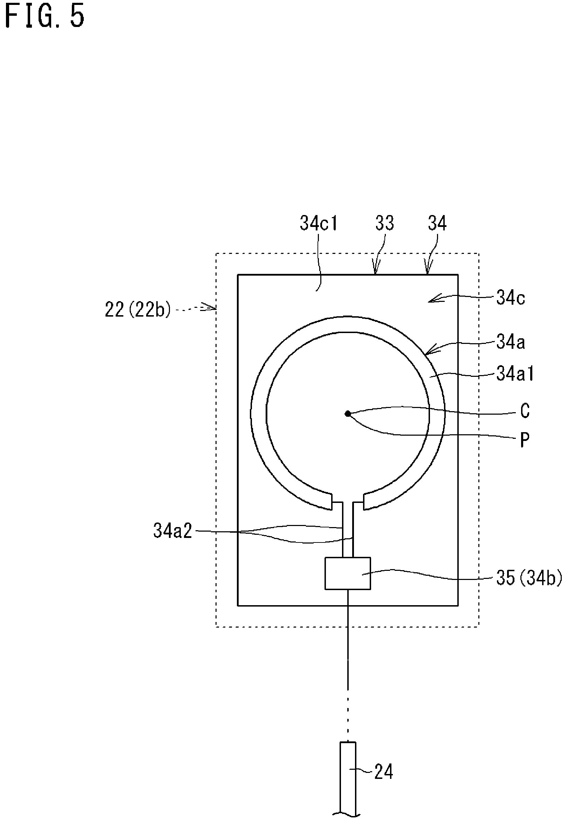

FIG. 5 is a diagram illustrating a substrate surface of the circuit substrate 34c illustrated in FIG. 4. As illustrated in FIG. 5, the power receiving antenna 34a and the circuit chip 35 are mounted on a substrate surface 34c1 of the circuit substrate 34c. The power receiving antenna 34a includes a C-shaped loop element 34a1 and a pair of lines 34a2. The loop element 34a1 and the pair of lines 34a2 are formed of metal foils such as copper foils patterned on the substrate surface 34c1. The loop element 34a1 is an antenna element for receiving transmission electric power from the power supply device 6. The pair of lines 34a2 connects two ends of the loop element 34a1 to the circuit chip 35. The circuit chip 35 is a circuit chip including the rectifier circuit 34b. The first power line 24 is connected to the circuit chip 35.

The housing body 22a of the present embodiment is fixed to the circular surface portion 9b of the turret 8 such that the rotation axis C passes through a center P of the loop element 34a1 (antenna element). The position of the power receiving antenna 34a may be changed by moving the housing 22 (housing body 22a) on the circular surface portion 9b. Even when the power receiving antenna 34a is fixed at a position where the rotation axis C does not pass through the center of the loop element 34a1, the power receiving antenna 34a is fixed at a position closer to the rotation axis C on the end surface 8a of the turret 8 because the power receiving antenna 34a is fixed to the circular surface portion 9b. Thus, the power receiving antenna 34a can appropriately receive the radio wave from the power transmitting antenna 6a even when the turret 8 rotates.

However, the power receiving antenna 34a is preferably fixed to the turret 8 such that the rotation axis C passes through the center P of the loop element 34a1. Accordingly, even when the turret 8 rotates around the rotation axis C, a change in the relative position of the power receiving antenna 34a (loop element 34a1) with respect to the power transmitting antenna 6a within the machining space S is suppressed, thereby enabling more stable reception of transmission electric power from the power transmitting antenna 6a.

In the present embodiment, the housing body 22a is formed of resin, but the housing body 22a may be formed of metal such as a steel plate. In this case, a window portion made of resin or the like for allowing a radio wave from the power transmitting antenna 6a to pass through is provided in a part of the housing body 22a.

In FIG. 3, the power control unit 30 provided in the first tool body 20 is provided with the DC electric power by the rectenna 34 (power receiving antenna circuit 33) via the first power line 24, as described above. The power control unit 30 has a function of converting the DC electric power provided by the rectenna 34 into a predetermined voltage, controlling charging and discharging of the power storage unit 32, and providing the DC electric power from the rectenna 34 and the DC electric power from the power storage unit 32 to the first sensor 26 and the wireless communication unit 28. In addition, in response to being provided with the DC electric power by the rectenna 34, the power control unit 30 can provide the DC electric power only to the power storage unit 32. In this case, the first sensor 26 and the wireless communication unit 28 are provided with DC electric power by the power storage unit 32. In addition, when the power control unit 30 is not provided with the DC electric power by the rectenna 34, the power control unit 30 can provide the DC electric power stored in the power storage unit 32 to the first sensor 26 and the wireless communication unit 28.

The power storage unit 32 includes, for example, a battery or a capacitor. The power storage unit 32 stores the DC electric power provided via the power control unit 30. The power storage unit 32 discharges the stored electric power based on the control of the power control unit 30.

The first sensor 26 is a sensor for detecting the state of the shank 20a. More specifically, the first sensor 26 includes a strain sensor, a temperature sensor, an acceleration sensor, and the like. The first sensor 26 has a function of detecting a strain, a temperature, and an acceleration (vibration) which are the state of the shank 20a. In response to being provided with the DC electric power by the power control unit 30, the first sensor 26 provides an output indicating a result of detecting the state of the shank 20a to the wireless communication unit 28.

The wireless communication unit 28 includes an antenna 28a and has a function of performing wireless communication with the external device 7. The wireless communication unit 28 wirelessly transmits the output provided by the first sensor 26 as output information. In response to being provided with the DC electric power by the power control unit 30, the wireless communication unit 28 establishes a communication connection with the external device 7 and starts wireless transmission of the output information.

When cutting machining is performed using the cutting system 1, first, an operator of the system 1 mounts a necessary cutting tool 4 on the turret 8. The operator mounts a workpiece on the main spindle unit. Thereafter, the operator closes the cover of the machine tool 2 to enclose the machining space S. The operator then causes the power supply device 6 to start the wireless power supply to the cutting tool 4. Thus, the cutting tool 4 receives the transmission electric power from the power supply device 6. In response to being provided with the electric power by the power supply device 6, the first sensor 26 of the cutting tool 4 starts detecting the state of the shank 20a and outputting the detection result. Furthermore, the wireless communication unit 28 establishes a communication connection with the external device 7 and starts wireless transmission of the output information. Thereafter, the operator causes the machine tool 2 to operate and start cutting machining.

In this case, the first sensor 26 of the cutting tool 4 provides an output indicating a result of detecting the state of the cutting tool 4 to the wireless communication unit 28. The wireless communication unit 28 wirelessly transmits the output provided by the first sensor 26 as output information. The output information transmitted by the wireless communication unit 28 is received by the external device 7. The external device 7 that has received the output information acquires information indicating the state of the shank 20a from the output information. The external device 7 outputs the acquired information indicating the state of the shank 20a from the input/output unit 7c. Thus, the external device 7 can output the machining state (the state of the cutting tool 4) during cutting machining to the operator.

According to the above configuration, the power receiving antenna circuit 33 (rectenna 34) is housed in the housing 22 which is separate from the first tool body 20, thereby eliminating a need to incorporate the power receiving antenna circuit 33 in the first tool body 20. As a result, the flexibility in the placement and circuit scale of the power receiving antenna circuit 33 can be enhanced.

In the present embodiment, the machine tool 2 includes the turret 8, and the housing 22 includes the housing body 22a and the fixing portion 42 (magnet 48) that fixes the housing body 22a to the circular surface portion 9b of the turret 8, so that the housing 22 can be fixed to the turret 8 together with the first tool body 20. Furthermore, the magnet 48 can adhere and fix the opposing surface 40a of the housing body 22a to the circular surface portion 9b by magnetic force. The circular surface portion 9b and the opposing surface 40a are adhered to each other by the magnetic force of the magnet 48 in the present embodiment. However, an adhesive layer made of an adhesive, an adhesive tape, or the like may be provided between the circular surface portion 9b and the opposing surface 40a, and the circular surface portion 9b and the opposing surface 40a may be adhered to each other by the adhesive layer.

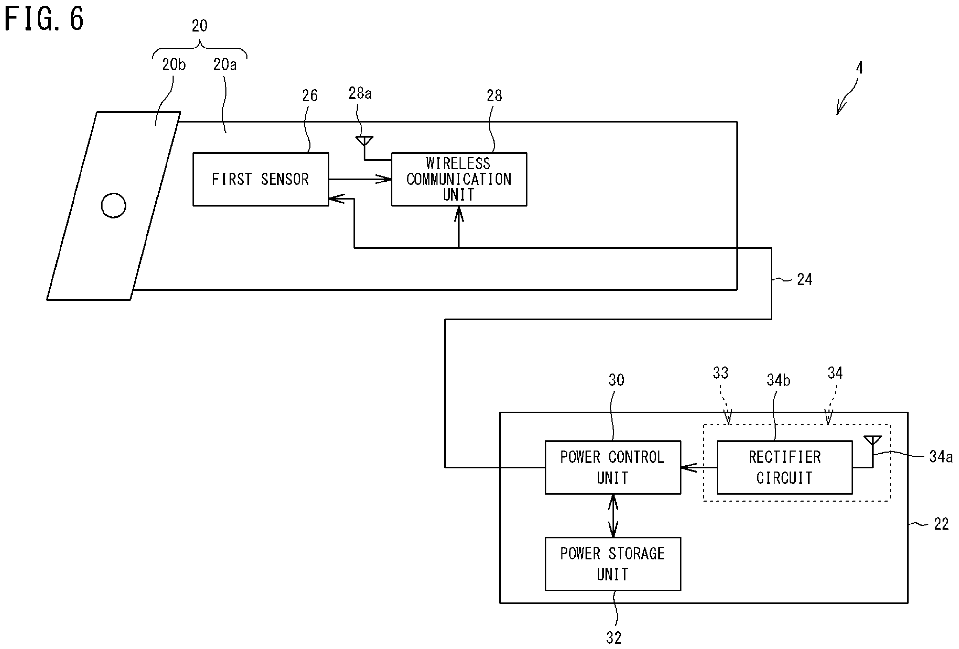

The power control unit 30 and the power storage unit 32 are provided in the shank 20a in the present embodiment. However, the power control unit 30 and the power storage unit 32 may be housed in the housing 22, as illustrated in FIG. 6. Since the housing 22 is fixed onto the circular surface portion 9b, it is relatively easy to secure a space for housing the power control unit 30 and the power storage unit 32 in the housing 22. In addition, in the shank 20a, it is unnecessary to provide a space for housing the power control unit 30 and the power storage unit 32. Furthermore, by minimizing the space provided in the shank 20a, the strength of the shank 20a can be maintained at a higher level.

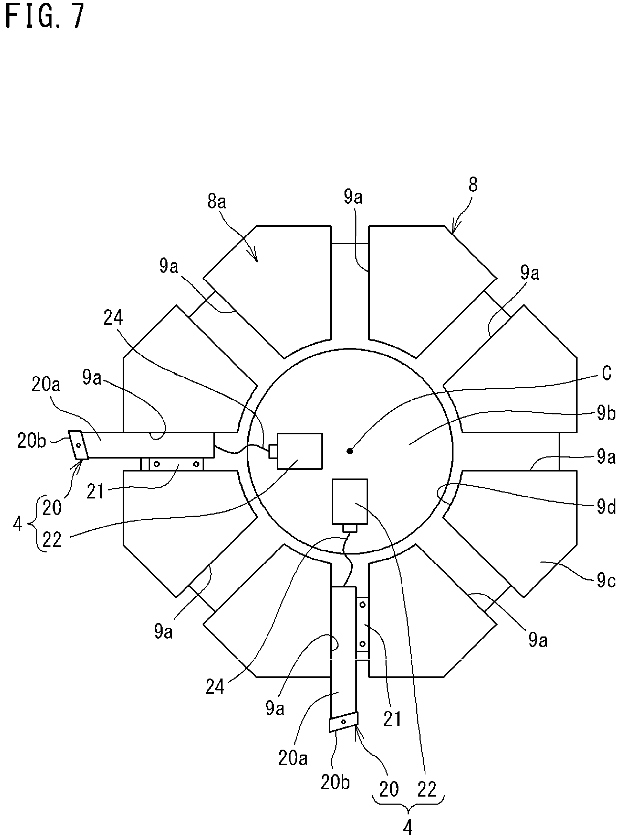

In the present embodiment, one cutting tool 4 is mounted on the turret 8, but two or more cutting tools 4 may be mounted as illustrated in FIG. 7. In this case, it is impossible to arrange all of the housings 22 of the cutting tools 4 at positions where the rotation axis C passes. However, since the housings 22 can be freely arranged at any position on the circular surface portion 9b by the magnet 48, as illustrated in FIG. 7, by arranging each of the housings 22 around the rotation axis C, each of the housings 22 (power receiving antenna circuits 33) can be arranged so as to move as little as possible with respect to the power transmitting antenna 6a even when the turret 8 rotates.

### [Second embodiment]

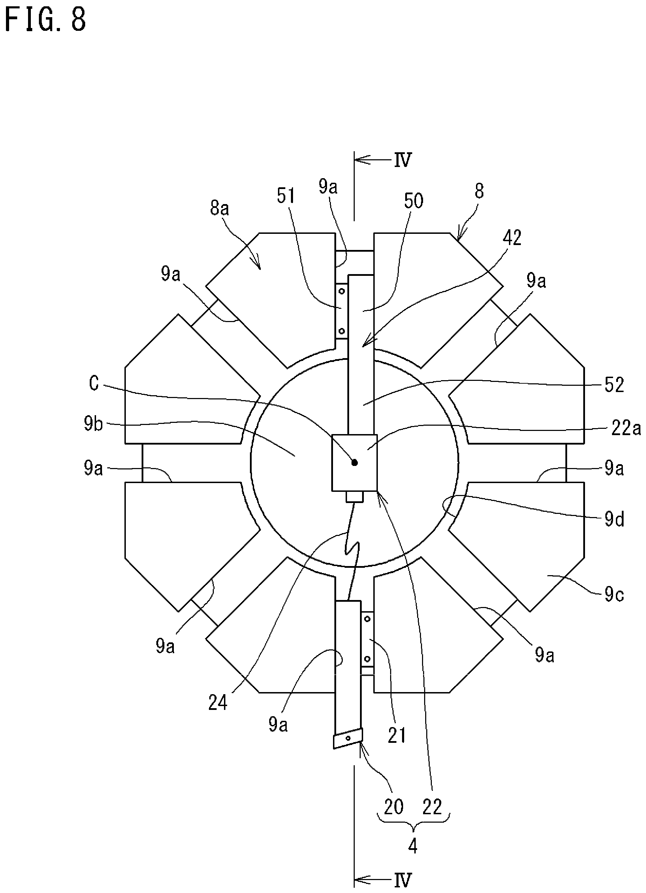

FIG. 8 is an external view of the end surface 8a of the turret 8 on which the cutting tool 4 according to the second embodiment is mounted when viewed from the front. The present embodiment is different from the first embodiment in that the fixing portion 42 of the housing 22 includes a gripped portion 50 and an arm portion 52 instead of the magnet 48. The housing 22 may or may not include the partition plate 22b.

The gripped portion 50 and the arm portion 52 are resin members integrally provided with the housing body 22a. The gripped portion 50 is a rectangular member and is gripped in the tool mounting groove 9a of the turret 8. The tool mounting groove 9a in which the gripped portion 50 is gripped is positioned on the opposite side of the rotation axis C with respect to the tool mounting groove 9a in which the first tool body 20 is gripped.

The gripped portion 50 is mounted in the tool mounting groove 9a together with the fixing plate 51, similarly to the shank 20a. The gripped portion 50 is gripped between the fixing plate 51 and the wall surface of the tool mounting groove 9a.

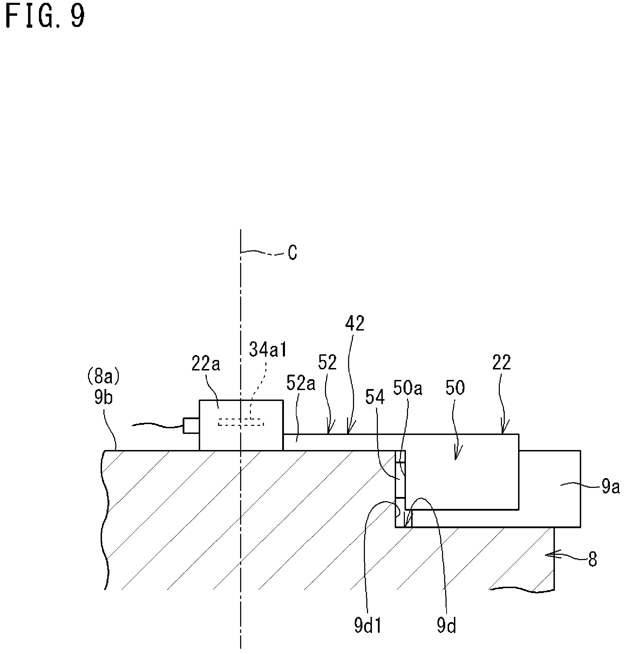

FIG. 9 is a cross-sectional view taken along line IV-IV in FIG. 8. In FIG. 9, the turret 8 is shown in cross-section and the housing 22 is shown in appearance. As illustrated in FIG. 9, the arm portion 52 extends from the gripped portion 50. The housing body 22a is provided at the distal end 52a of the arm portion 52. Thus, the arm portion 52 connects the gripped portion 50 to the housing body 22a.

In addition, the arm portion 52 extends along the circular surface portion 9b (end surface 8a) of the turret 8 in a state where the gripped portion 50 is gripped in the tool mounting groove 9a. The arm portion 52 extends toward the rotation axis C of the turret 8. Thus, by disposing the housing 22 on the turret 8 such that the gripped portion 50 is gripped by the tool mounting groove 9a and the arm portion 52 extends along the circular surface portion 9b, the housing body 22a can be easily fixed near the rotation axis C of the turret 8.

Furthermore, a spacer 54 is provided on the inner surface 50a of the gripped portion 50. The inner surface 50a is a surface of the gripped portion 50 facing the rotation axis C side. The spacer 54 is interposed between the inner surface 50a and the outer peripheral surface 9d1 of the annular groove 9d. By disposing the housing 22 on the turret 8 with the spacer 54 abutting against the outer peripheral surface 9d1, the housing body 22a can be disposed at a predetermined position on the circular surface portion 9b. In addition, the position of the housing body 22a on the circular surface portion 9b can be adjusted by adjusting the thickness of the spacer 54. The housing body 22a of the present embodiment is fixed to the circular surface portion 9b by adjusting the thickness of the spacer 54 such that the rotation axis C passes through the center of the loop element 34a1.

### [Third embodiment]

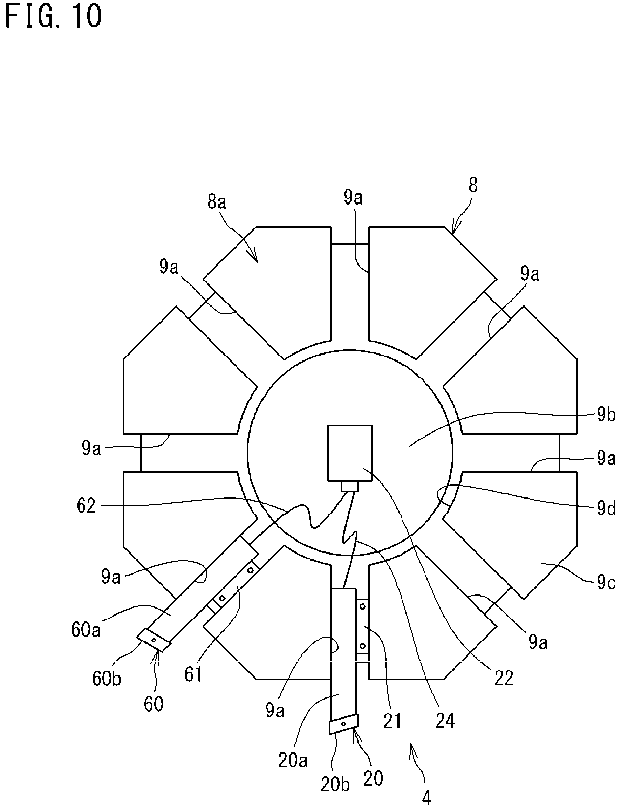

FIG. 10 is an external view of the end surface 8a of the turret 8 on which the cutting tool 4 according to a third embodiment is mounted when viewed from the front. The present embodiment is different from the first embodiment in that the cutting tool 4 includes a second tool body 60 in addition to the first tool body 20.

The second tool body 60 includes a shank 60a and a cutting insert 60b as in the first tool body 20. The second tool body 60 is gripped in a tool mounting groove 9a positioned circumferentially adjacent to the tool mounting groove 9a in which the first tool body 20 is gripped. The second tool body 60 is gripped between the fixing plate 61 and the wall surface of the tool mounting groove 9a. The second tool body 60 is connected to the housing 22 by a second power line 62. The second power line 62 is a power line for supplying electric power from the housing 22 to the second tool body 60.

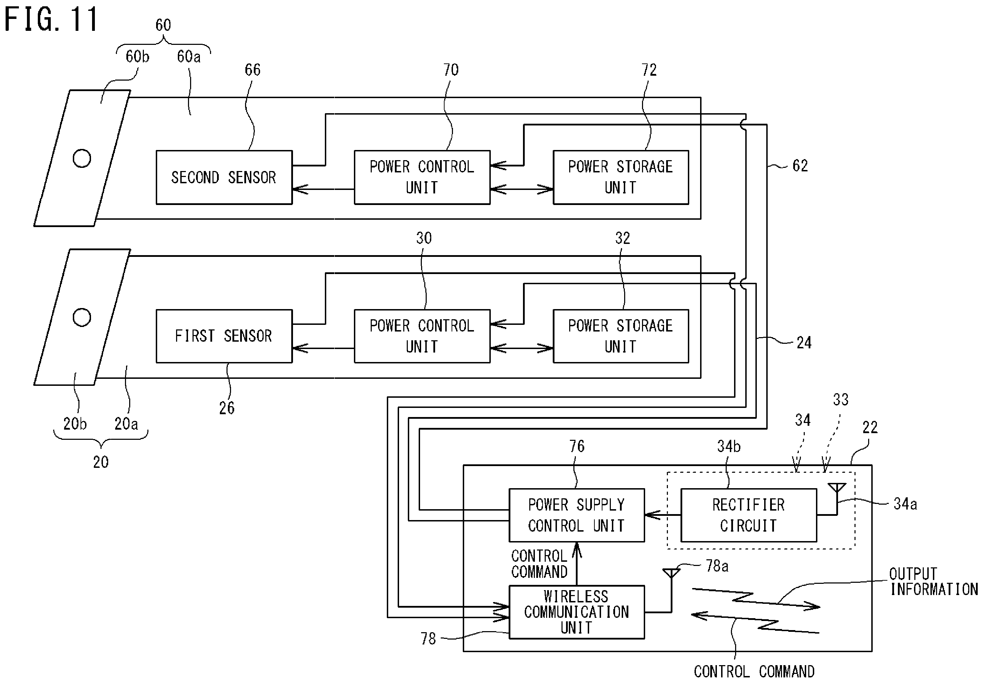

FIG. 11 is a block diagram of a cutting tool 4 according to a third embodiment. As illustrated in FIG. 11, the first sensor 26, the power control unit 30, and a power storage unit 32 are provided in the shank 20a of the first tool body 20. The second sensor 66, the power control unit 70, and the power storage unit 72 are provided in the shank 60a of the second tool body 60. The second sensor 66, the power control unit 70, and the power storage unit 72 have the same configurations as the first sensor 26, the power control unit 30, and the power storage unit 32, respectively. That is, the second tool body 60 has the same configuration as the first tool body 20.

Furthermore, the cutting tool 4 of the present embodiment includes, within the housing 22, a power supply control unit 76 and a wireless communication unit 78 in addition to the rectenna 34. The power supply control unit 76 has a function of supplying electric power received by the rectenna 34 (power receiving antenna circuit 33) to the first sensor 26, the second sensor 66, and the wireless communication unit 78.

The power supply control unit 76 and the power control unit 30 of the first tool body 20 are connected to each other by a first power line 24. The power supply control unit 76 provides electric power to the first sensor 26 via the first power line 24 and the power control unit 30. The power supply control unit 76 and the power control unit 70 of the second tool body 60 are connected to each other by the second power line 62. The power supply control unit 76 provides electric power to the second sensor 66 via the second power line 62 and the power control unit 70. In response to being provided with the DC electric power by the rectenna 34, the power supply control unit 76 provides electric power to both sensors 26, 66 and the wireless communication unit 78.

The wireless communication unit 78 includes an antenna 78a and has a function of performing wireless communication with the external device 7. In the cutting tool 4 of the present embodiment, the first tool body 20 and the second tool body 60 do not have a function of communicating with the external device 7. Instead, the wireless communication unit 78 is provided in the housing 22, adopting a configuration that centralizes the communication functions with the external device 7.

The wireless communication unit 78 and both sensors 26 and 66 are connected to each other. The wireless communication unit 78 is provided with the outputs of both sensors 26 and 66. The wireless communication unit 78 wirelessly transmits the outputs provided by both the sensors 26 and 66 as output information. The wireless communication unit 78 transmits the output information of the first sensor 26 and the output information of the second sensor 66 to the external device 7 in an identifiable manner. In response to being provided with the DC electric power by the power supply control unit 76, the wireless communication unit 78 establishes a communication connection with the external device 7 and starts wireless transmission of the output information.

The wireless communication unit 78 also has a function of receiving a control command transmitted by the external device 7 and providing the control command to the power supply control unit 76. The power supply control unit 76 controls the electric power to be provided to the first sensor 26 and the electric power to be provided to the second sensor 66 based on the control command provided by the external device 7 via the wireless communication unit 78. More specifically, the control command includes information indicating either the first sensor 26 or the second sensor 66. The power supply control unit 76 supplies more electric power to the sensor indicated by the control command.

The processing unit 7a of the external device 7 (see FIG. 1) generates a control command based on the output information transmitted from the wireless communication unit 78. The processing unit 7a compares the output information of the first sensor 26 with the output information of the second sensor 66, and determines which of the first tool body 20 and the second tool body 60 is currently in use (during machining). Next, the processing unit 7a causes information indicating the sensor of the tool body determined to be currently in use to be included in the control command. Accordingly, the power supply control unit 76 supplies more electric power to the sensor of the tool body that is currently in use.

In the present embodiment, the cutting tool 4 includes the power supply control unit 76 that supplies the electric power received by the rectenna 34 to the first sensor 26 and the second sensor 66, and thus the electric power received by a single rectenna 34 can be supplied to a plurality of sensors.

In the present embodiment, the cutting tool 4 includes the wireless communication unit 78 that can communicate with the external device 7, and the power supply control unit 76 is configured to control the electric power to be provided to the first sensor 26 and the electric power to be provided to the second sensor 66 based on the control command provided by the external device 7 via the wireless communication unit 78, so that the power supply to the first sensor 26 and the second sensor 66 can be controlled from the outside of the machining space S.

Furthermore, the control command is generated based on the output information transmitted by the wireless communication unit 78. By referring to the output information, it is possible to identify the tool body currently in use from among the first tool body 20 and the second tool body 60. The external device 7 generates a control command for supplying more electric power to the sensor of the tool body currently in use. That is, the external device 7 generates a control command that prioritizes power supply to the sensor of the tool body currently in use, thereby enabling efficient power supply.

In the present embodiment, the control command is generated based on the output information. However, in a case where the external device 7 can acquire information indicating a state of the machine tool 2, the control command may be generated based on the information indicating the state of the machine tool 2. The information indicating the state of the machine tool 2 includes information indicating which tool body is currently in use among the tool bodies mounted on the turret 8. Thus, by referring to the information indicating the state of the machine tool 2, it is possible to identify the tool body currently in use from among the first tool body 20 and the second tool body 60. Accordingly, the external device 7 can generate a control command for supplying more electric power to the sensor of the tool body currently in use based on the information indicating the state of the machine tool 2.

In the present embodiment, the first tool body 20 and the second tool body 60 do not have the communication functions with the external device 7, and the wireless communication unit 78 is provided in the housing 22 to centralizes the communication functions with the external device 7. However, the first tool body 20 and the second tool body 60 may be configured such that each of the first tool body 20 and the second tool body 60 is provided with a communication unit for communicating with the external device 7 and transmits the output information of the sensor.

In the present embodiment, the power control units 30 and 70 and the power storage units 32 and 72 are provided in the shanks 20a and 60a, respectively, but the power control units 30 and 70 and the power storage units 32 and 72 may be housed in the housing 22.

### [Fourth embodiment]

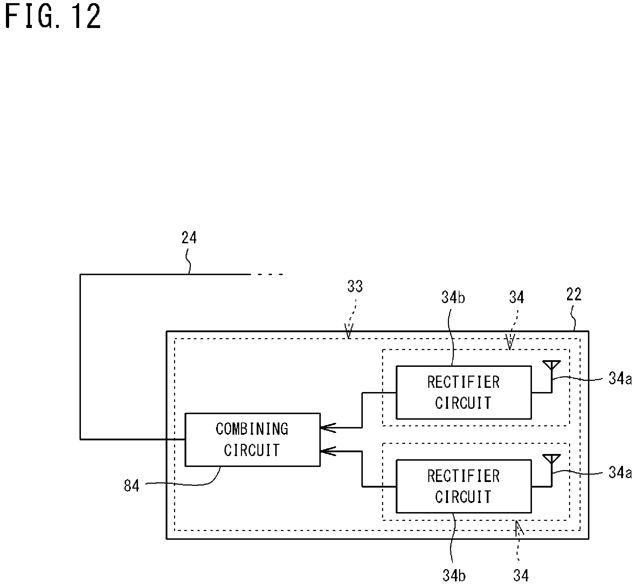

FIG. 12 is a diagram illustrating a power receiving antenna circuit 33 according to a fourth embodiment. The present embodiment is different from the first embodiment in that the power receiving antenna circuit 33 includes two rectennas 34.

The power receiving antenna circuit 33 of the present embodiment includes two rectennas 34 and a combining circuit 84. Each of the two rectenna 34 receives a power supplying radio wave from the power supply device 6 and outputs DC electric power. The combining circuit 84 combines the DC electric power output by the two rectenna 34. The combined DC electric power is provided to the power control unit 30 of the first tool body 20 via the first power line 24.

The two rectennas 34 included in the power receiving antenna circuit 33 of the present embodiment each form a circuit unit including a power receiving antenna 34a that receives transmission electric power from the power transmitting antenna 6a. That is, in the present embodiment, each of the two rectennas 34 has the power receiving antenna 34a, and each of the two rectennas 34 outputs electric power. Thus, by combining the electric powers output by the two rectenna 34, more electric power can be received.

In the present embodiment, the power receiving antenna circuit 33 includes two rectennas 34, but the power receiving antenna circuit 33 may include a greater number of rectennas. The power receiving antenna circuit 33 illustrated in FIG. 12 can be applied not only to the cutting tool 4 of the first embodiment but also to the cutting tool 4 of other embodiments.

### [Others]

It should be understood that the embodiments disclosed herein are merely illustrative and non-restrictive in every respect. In the above embodiments, the power receiving antenna 34a includes the loop element 34a1 as an antenna element to form a loop antenna. However, the power receiving antenna 34a may form a dipole antenna having a pair of linear elements or a patch antenna having a patch element, other than the loop antenna. The center of the antenna element in the dipole antenna is a pair of base end portions of the pair of linear elements or a midpoint between the pair of base end portions. In addition, the center of the antenna element in the patch antenna is the center of the radiation surface of the patch element.

In the above embodiments, the cutting tool 4 is a tool for turning machining, but the cutting tool 4 may be a tool for performing milling in cutting machining. The milling is a machining performed by pressing a tool against a fixed workpiece while rotating the tool.

The scope of the present invention is defined by the claims, not in the sense described above, and is intended to include all modifications within the scope and meaning equivalent to the claims.

### REFERENCE SIGNS LIST

- 1: cutting system
- 2: machine tool
- 4: cutting tool
- 6: power supply device
- 6a: power transmitting antenna
- 6b: power transmitting unit
- 7: external device
- 7a: processing unit
- 7b: storage unit
- 7c: input/output unit
- 7d: communication unit
- 8: turret
- 8a: end surface
- 9a: tool mounting groove
- 9b: circular surface portion
- 9c: outer surface portion
- 9d: annular groove
- 9d1: outer peripheral surface
- 10: drive device
- 12: movement device
- 20: first tool body
- 20a: shank
- 20b: cutting insert
- 21: fixing plate
- 22: housing
- 22a: housing body
- 22b: partition plate
- 22b1: plate surface
- 22c: waterproof connector
- 24: first power line
- 26: first sensor
- 28: wireless communication unit
- 28a: antenna
- 30: power control unit
- 32: power storage unit
- 33: power receiving antenna circuit
- 34: rectenna (circuit unit)
- 34a: power receiving antenna
- 34a1: loop element
- 34a2: line
- 34b: rectifier circuit
- 34c: circuit substrate
- 34c1: substrate surface
- 35: circuit chip
- 40: outer plate
- 40a: opposing surface
- 40b: inner surface
- 42: fixing portion
- 48: magnet
- 50: gripped portion
- 50a: inner surface
- 51: fixing plate
- 52: arm portion
- 52a: distal end
- 54: spacer
- 60: second tool body
- 60a: shank
- 60b: cutting insert
- 61: fixing plate
- 62: second power line
- 66: second sensor
- 70: power control unit
- 72: power storage unit
- 76: power supply control unit
- 78: wireless communication unit
- 78a: antenna
- 84: combining circuit
- 100: power source
- C: rotation axis
- P: center
- S: machining space

## Claims

1. A cutting system comprising:
a power supply device including a power transmitting antenna provided in a machining space of a machine tool; and
a cutting tool disposed in the machining space and including a power receiving antenna circuit configured to receive transmission electric power from the power transmitting antenna, wherein
the cutting tool includes:
a first tool body provided with a first sensor; and
a housing separate from the first tool body, the housing being connected to the first tool body via a first power line for providing electric power to the first sensor and being configured to house the power receiving antenna circuit therein.

2. The cutting system according to claim 1, wherein
the machine tool includes a turret configured to grip the tool body, and
the housing includes:
a housing body; and
a fixing portion configured to fix the housing body to an end surface of the turret in an axial direction of the turret.

3. The cutting system according to claim 2, wherein
the housing body has an opposing surface, the opposing surface facing the end surface in a state where the housing body is fixed to the end surface, and
the fixing portion includes an adhesion portion configured to adhere the opposing surface to the end surface.

4. The cutting system according to claim 2, wherein
the fixing portion includes:
a gripped portion configured to be gripped in a tool mounting groove of the turret; and
an arm portion extending from the gripped portion and having a distal end provided with the housing body, and
the arm portion extends toward a rotation axis of the turret along the end surface of the turret in a state where the gripped portion is gripped in the tool mounting groove.

5. The cutting system according to any one of claims 2 to 4, wherein
the housing body is fixed to the end surface of the turret such that a rotation axis of the turret passes through a center of an antenna element of the power receiving antenna circuit.

6. The cutting system according to claim 5, wherein
the antenna element is a loop element.

7. The cutting system according to any one of claims 1 to 6, further comprising
a power storage unit provided in one of the first tool body and the housing and configured to store electric power received by the power receiving antenna circuit.

8. The cutting system according to any one of claims 1 to 7, wherein
the cutting tool further includes:
a second tool body provided with a second sensor and connected to the housing via a second power line for providing electric power to the second sensor; and
a power supply control unit configured to supply electric power received by the power receiving antenna circuit to the first sensor and the second sensor.

9. The cutting system according to claim 8, further comprising
an external device disposed outside the machining space and configured to control the power supply control unit, wherein
the cutting tool further includes a communication unit capable of communicating with the external device, and
the power supply control unit is configured to control the electric power to be provided to the first sensor and the electric power to be provided to the second sensor, based on a control command from the external device, the control command being provided via the communication unit.

10. The cutting system according to claim 9, wherein
the control command is generated based on at least one of information indicating a state of the machine tool or output information transmitted from the communication unit, the output information including an output of the first sensor and an output of the second sensor.

11. The cutting system according to any one of claims 1 to 10, wherein
the power receiving antenna circuit includes:
a plurality of circuit units each including a power receiving antenna configured to receive transmission electric power from the power transmitting antenna; and
a combining circuit configured to combine electric powers output from the plurality of circuit units.

12. A cutting tool to be disposed in a machining space of a machine tool, the cutting tool comprising:
a power receiving antenna circuit configured to receive transmission electric power from a power supply device, the transmission electric power being transmitted through a power transmitting antenna provided in the machining space;
a tool body provided with a sensor; and
a housing separate from the tool body, the housing being connected to the tool body via a power line for providing electric power to the sensor and being configured to house the power receiving antenna circuit therein.
